# EUROPEAN PATENT SPECIFICATION

(11) **EP 2 668 424 B1**
(45) Date of publication and mention of the grant of the patent: **24.12.2014**
(21) Application number: 12703471.8
(22) Date of filing: 22.01.2012
(51) Int. Cl.: F16K 7/04, F16K 31/02

(54) **PINCH VALVE**
QUETSCHVENTIL
ROBINET À MANCHON DÉFORMABLE

(30) Priority: 24.01.2011 FR 1150530
(43) Date of publication of application: 04.12.2013
(73) Proprietor: Fluid Automation Systems S.A., 1290 Versoix (CH)
(72) Inventor: DEPERRAZ, Nicolas, 74890 Bons-en-Chablais (FR)
(74) Representative: Hartwell, Ian Peter
(86) International application number: PCT/EP2012/050920
(87) International publication number: WO 2012/101067

(56) References cited:
- US-A- 274 447
- US-B1- 6 260 818
- US-B1- 6 279 869

## Description

### TECHNICAL FIELD

The embodiments described below relate to valves and more particularly, but not exclusively, to a shape memory alloy actuated pinch valve.

### BACKGROUND OF THE INVENTION

Fluid handling devices are becoming increasingly popular and there is an increased demand for fluid handling devices that are both portable and easy to use. Portable fluid handling devices are being used for applications such as home care, point of care testing, fuel cells, fragrance dispensers, etc. In order for a portable fluid handling device to be effective and efficient, it should be lightweight, small in size, consume minimal power, operate with low noise, and be cost effective to manufacture. In many applications, it is also important that the fluid handling device provide an accurate and consistent fluid distribution. Therefore, it is preferable to incorporate an efficient fluid valve in the fluid handling device. In many aspects, the fluid valve characterizes the device's efficiency.

One solution of a portable valve that attempts to meet the above criteria is a miniature solenoid valve. The miniature solenoid valve however, is not as effective as originally anticipated. Solenoid valves are typically limited in size, and in order to obtain adequate performance, a solenoid valve typically consumes a substantial amount of power. The power consumption of a solenoid valve, in some circumstances, is unacceptable, especially when using batteries as a power source, for example. The batteries may not be able to provide power to the valve for a sufficient length of time. Furthermore, in some applications, it may be desirable to retain the valve in a specific open or mid-point position. If this position requires continuous actuation of the solenoid, the valve will likely consume a substantial amount of power thereby increasing the cost associated with operating the valve.

Another prior art solution has been the use of electrically actuated piezo valves. Some piezo valves operate using a closing arm that seals against a sealing shoulder when the piezo element is de-activated. These valves typically require a substantial amount of space to operate and may not always provide an adequate solution as they are subject to clogging when used with liquids that may dry around the orifice.

Yet another solution has been the use of shape memory alloys that transform shape and/or size when heated. Shape memory alloy actuated valves provide an advantage over the previously mentioned prior art solutions as they can typically be manufactured smaller and generally consume less power. Although shape memory alloy actuated valves provide an advantage over traditional designs, there is a need for a shape memory alloy actuated pinch valve that can be operated using less power than prior art designs. Prior art pinch valves typically provide a plunger or other type of movable member to compress a tube. The plunger is generally held against the tube by a spring or other biasing device. Therefore, in order to raise the plunger and allow the tube to return to its normal shape, the actuating device is required to overcome the biasing force of the spring. Because the spring compresses the tube with a strong enough force to prevent leaking, this configuration can require a substantial amount of power to overcome the spring force and actuate the valve.

Another disadvantage to typical pinch valve designs is that if the valve is a normally closed configuration, the tubing is normally compressed. Long periods of compression can result in a permanent deformation of the tubing.

Therefore, there exists a need in the art for a pinch valve that includes a self-closing fluid tube. Furthermore, there exists a need in the art for a self-closing pinch valve that can be actuated with less power than the prior art. The embodiments described below provide these and other advantages and an advance in the art is achieved.

A prior art pinch valve having a shape memory alloy actuator have been disclosed in the document US-679869-B1.

### SUMMARY OF THE INVENTION

A pinch valve is provided according to the independent claim 1.

A method of operating a pinch valve is provided according the independent method claim 10.

### ASPECTS

According to an aspect, an apparatus comprises:
a base;
   a deformable sleeve, including an aperture, coupled to the base; and
   one or more shape memory alloy elements coupled to the base and extending around at least a portion of the deformable sleeve.

The apparatus further comprises a tube extending through the aperture.

Preferably, the tube includes a deformable orifice.

Preferably, the deformable orifice comprises a pair of opposed lips extending from an inner surface of the tube to define a normally closed substantially fluid-tight slit.

Preferably, the pair of opposed lips extend from the inner surface of the tube at an angle with respect to a longitudinal axis of the tube.

Preferably, the apparatus further comprises an electrical contact coupled to each of the one or more shape memory alloy elements.

Preferably, the apparatus further comprises a tension assembly coupled to the one or more shape memory alloy elements.

Preferably, the tension assembly comprises a biasing member located within a channel formed in the base.

Preferably, the tension assembly comprises a release plug and located within an aperture formed in the base.

Preferably, the apparatus further comprises one or more compression spaces formed in the deformable sleeve.

According to another aspect, a method of operating a pinch valve including a base, a deformable sleeve coupled to the base, one or more shape memory alloy elements coupled to the base and extending around at least a portion of the deformable sleeve, and a tube extending through an aperture formed in the deformable sleeve comprises steps of:
heating the one or more shape memory alloy elements above a transformation temperature;
deforming the deformable sleeve; and
compressing at least a portion of the tube using the one or more shape memory alloy elements.

Preferably, the step of compressing at least a portion of the tube comprises actuating a deformable orifice of the tube.

Preferably, the step of actuating the deformable orifice comprises compressing a pair of opposed lips extending from an inner surface of the tube to open a normally closed substantially fluid-tight slit.

Preferably, the step of heating the one or more shape memory alloy elements comprises energizing an electrical contact coupled to each of the one or more shape memory alloy elements.

Preferably, the step of deforming the deformable sleeve comprises compressing one or more compression spaces formed in the deformable sleeve.

### BRIEF DESCRIPTION OF THE DRAWINGS

FIG. 1 shows a pinch valve according to the invention;
FIG. 2 shows a partial cross-sectional view of the pinch valve according to another embodiment of the invention;
FIG. 3 shows a SMA element according to an embodiment of the invention;
FIG. 4 shows the pinch valve according to another embodiment of the invention; and
FIG. 5 shows the pinch valve according to another embodiment of the invention.

### DETAILED DESCRIPTION OF EMBODIMENTS

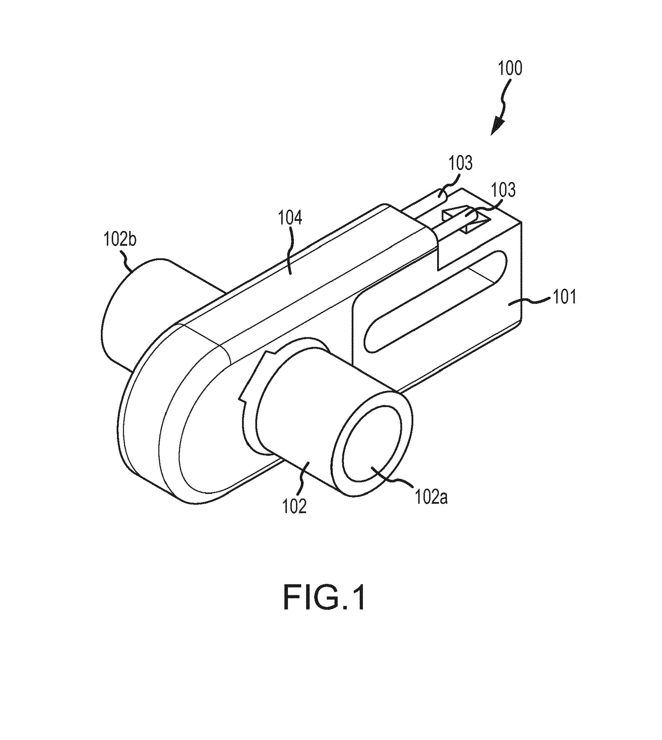

FIGS. 1-5 and the following description depict specific examples to teach those skilled in the art how to make and use the best mode of embodiments of a pinch valve. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the pinch valve. As a result, the embodiments described below are not limited to the specific examples described below, but only by the appended claims.

**FIG. 1** shows a pinch valve 100 according to an embodiment. The pinch valve 100 comprises a base 101 and a tube 102. Those skilled in the art will readily recognize that the tube 102 can be coupled at either end to a fluid supply and a fluid delivery system according to known principles. Therefore, the tube 102 shown in FIG. 1 may be a small portion of the tube as a whole and may extend much further in either direction. In the embodiment shown in FIG. 1, the tube 102 comprises a first end 102a and a second end 102b. According to an embodiment, the first end 102a comprises a fluid inlet while the second end 102b comprises a fluid outlet. However, it should be appreciated that the direction of flow may be reversed and therefore, the particular orientation shown in the drawings and described below should not limit the scope of the present embodiment. According to an embodiment, the tube 102 can comprise a compressible tube that can be elastically deformed and returned to its original shape and size.

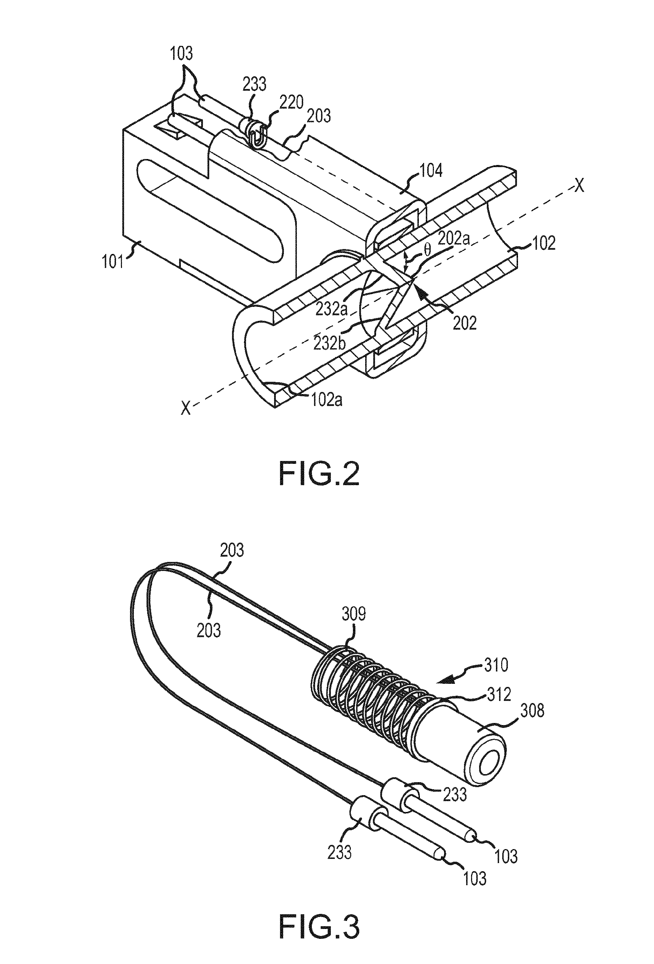

Also shown in FIG. 1 are two electrical contacts 103. As can be appreciated, each of the electrical contacts 103 can be coupled to a shape memory alloy (SMA) element 203 (See FIG. 2). While two electrical contacts 103 are shown, it should be appreciated that the pinch valve 100 may comprise any number of desired electrical contacts 103 to correspond to any number of desired SMA elements. Further, in some embodiments, an electrical contact may be coupled to more than one SMA element.

According to an embodiment, the pinch valve 100 further comprises a cover 104. The cover 104 can be coupled to the base 101 to enclose at least a portion of the SMA elements 203 as well as other internal components. According to an embodiment, the cover 104 can protect the SMA elements 203 from environmental conditions the valve 100 is exposed to during use. According to an embodiment, the cover 104 is removably coupled to the base 101. The cover 104 may be removed from the base 101 in order to remove the tube 102 or the SMA elements 203, for example. The tube 102 may be removed and replaced as a preventative step at regular time intervals or if the tube 102 is damaged, for example. Likewise, the SMA elements 203 may be removed and replaced. According to an embodiment, the SMA elements 203 may be removed and replaced based on the desired actuation force, for example. According to an embodiment, with the tube 102 and the SMA elements 203 capable of being removed from the base 101, the base 101 may be used multiple times with various SMA elements 203 and tubes 102.

**FIG. 2** shows a partial cross-sectional view of the pinch valve 100 according to another embodiment. In the embodiment shown in FIG. 2, the interior of the tube 102 is shown. According to an embodiment, the tube 102 can include a deformable orifice 202. The deformable orifice 202 can extend from the inner surface 102a of the tube 102. According to an embodiment, the deformable orifice 202 can comprise a pair of opposed lips 232a, 232b. According to an embodiment, the opposed lips 232a, 232b can extend across the inner cross-sectional area of the tube 102. In other embodiments, the lips 232a, 232b may extend across less than the full inner cross-sectional area of the tube 102.

As explained in more detail below, according to an embodiment, when the valve 100 is de-actuated as shown in FIG. 2, the deformable orifice 202 can substantially prevent fluid from flowing through the tube 102, *i.e.,* the deformable orifice 202 can be self-closing. Conversely, when the valve is actuated, the tube 102 can be compressed to open the deformable orifice 202 and allow fluid to flow through the tube 102. In another alternative embodiment, the tube 102 may not include a deformable orifice 202 and the valve 100 can simply compress the tube 102 to restrict or close off fluid flow. Although the present embodiment describes a self-closing deformable orifice 202, it should be appreciated that in other embodiments, the deformable orifice 202 may be a normally opened orifice and when the valve is actuated, the tube 102 can be compressed to close the deformable orifice 202. Therefore, while the pinch valve 100 is described as a normally closed valve, the pinch valve 100 is not limited to a normally closed valve.

In some embodiments, fluid can flow in the direction of the arrow and therefore, fluid pressure can aid in the closing of the deformable orifice 202. As can be appreciated, in some embodiments, the opposed lips 232a, 232b can extend from the inner surface 102a of the tube 102 at an angle, θ, with respect to a longitudinal axis X-X of the tube 102. According to an embodiment, the angle, θ, is less than 90° to create a sloped surface. In other words, the opposed lips 232a, 232b may not extend perpendicular to the longitudinal axis X-X. When fluid is flowing in the direction of the arrow provided in FIG. 2, the fluid can act on the sloped surface of the lips 232a, 232b to provide an additional closing force on the deformable orifice 202.

According to an embodiment, deformable orifice 202 comprises a slit 202a formed by the pair of opposed lips 232a, 232b. The slit 202a is formed when the deformable orifice 202 is closed. According to an embodiment, the slit 202a comprises a substantially fluid-tight seal. As shown, the slit 202a can extend across a portion of the cross-sectional area of the inner surface of the tube 102. According to an embodiment, the slit 202a may extend across the entire cross-sectional area of the inside of the tube 102. The slit 202a can extend in a direction perpendicular to the longitudinal axis X-X of the tube 102. The deformable orifice 202 is discussed in more detail below.

Also shown in FIG. 2 is a partial cut-away of the cover 104, which shows a greater portion of one of the electrical contacts 103. According to an embodiment, the electrical contacts 103 can be coupled to the base 101. In the embodiment shown in FIG. 2, the electrical contacts 103 are coupled to the base 101 using a support bracket 220, which is visible by the partial cut-away of the cover 104. The support bracket 220 can be coupled to the base 101, for example. Alternatively, the support bracket 220 can be molded as an integral component of the base 101. According to an embodiment, the support bracket 220 can be provided to support at least a portion of the electrical contacts 103. As shown in FIG. 2 and illustrated better in FIG. 3, the electrical contacts 103 can include an enlarged portion 233. The enlarged portion 233 can couple the electrical contact 103 to the SMA elements 203. According to the embodiment shown in FIG. 2, the SMA elements 203 can extend through the support brackets 220. However, in the embodiment shown, the electrical contacts 103, and more specifically, the enlarged portion 233 of the electrical contacts cannot fit through the support brackets 220. Rather, the electrical contacts 103 can be positioned beyond the support brackets 220 with the SMA elements 203 positioned over the support brackets 220 and lowered into position with the electrical contacts 103 abutting against the support brackets 220 and the SMA elements extending through the support brackets 220. Advantageously, when the cover 104 is in place, the electrical contacts 103 can be held into position and can be prevented from moving towards the tube 102. According to another embodiment, the support brackets 220 may receive the enlarged portion 233 of the electrical contacts 103 to prevent the electrical contacts from moving towards or away from the tube 102 when the cover 104 is coupled to the base 101. For example, the electrical contacts 103 may be received by the support brackets 220 using a friction fit or a snap-fit arrangement.

As an alternative to the support brackets 220, in some embodiments, the cover 104, the base 101, or both, may include an aperture (not shown) that allows the SMA elements 203 to pass through, but prevents the electrical contacts 103 from passing through. In this alternative embodiment, with the SMA elements 203 in place, coupling the cover 104 to the base 101 can prevent the SMA elements 203 from moving. In other words, electrical contacts 103 can be coupled to the base 101 by being clamped between the cover 104 and the base 101.

It should be appreciated that the particular method used to couple the electrical contacts 103 to the base 101 is not important for purposes of the present pinch valve 100. Consequently, those skilled in the art will readily recognize alternative configurations for retaining the electrical contacts 103 in place that achieve substantially the same result.

**FIG. 3** shows the SMA elements 203 according to an embodiment. While two SMA elements are shown and described, it should be appreciated that the particular number of SMA elements can vary. Therefore, the presently described embodiment should in no way be limited to two SMA elements 203. Furthermore, while the SMA elements 203 are shown in the form of SMA wires, it should be appreciated that the SMA component 206 may comprise a variety of different forms and the present embodiment should not be limited to wires. For example, the SMA component may comprise a plate, a film deposition, etc.

As shown in FIG. 3, the SMA elements 203 are coupled to the electrical contacts 103 at a first end. According to an embodiment, the SMA elements 203 can be coupled to a tension assembly 310 at a second end. The tension assembly 310 may comprise a release plug 308, a spring 309, or both. Therefore, it should be appreciated that the SMA elements 203 may be coupled to the release plug 308 or the spring 309 according to known methods. While a single tension assembly 310 is shown coupled to both of the SMA elements 203, it should be appreciated that in alternative embodiments, an individual tension assembly may be coupled to each of the SMA elements 203. The tension assembly 310 can provide electrical contact to the second end of the SMA elements 203. According to an embodiment, the release plug 308 can include a lip 312, which is described in more detail below.

According to an embodiment, the electrical contacts 103 can be energized to thermoelectrically heat the SMA elements 203. Thermoelectrically heating the SMA elements 203 can be performed by applying a voltage between the electrical contact 103 and the release plug 308. Shape memory alloys are metals that are generally known for their physical transformation above a transformation temperature. By combining the appropriate alloys, the transformation temperature of the SMA elements 203 can be determined. The transformation temperature is generally understood as the temperature at which the SMA material starts to transform from a martensite crystal structure to an austenite crystal structure. When the SMA elements 203 are below the transformation temperature, the metal remains in the martensite crystal structure. In the martensite crystal structure, the metal can be physically deformed into a first size and/or shape and can remain in that shape while below the transformation temperature. According to an embodiment, the stretching of the SMA elements 203 can be accomplished using a biasing member 309. The biasing member 309 is described in more detail below.

Upon heating the SMA elements 203 to above the transformation temperature, the elements 203 begin to transform into the austenite crystal structure where the alloy returns to its "memorized", pre-deformed, size and/or shape. The transformation that occurs in SMA materials is relatively fast as no diffusion occurs as in many types of phase changes. This unique property of SMA materials can be utilized in the pinch valve 100 in order to selectively open or close the valve 100 as discussed below.

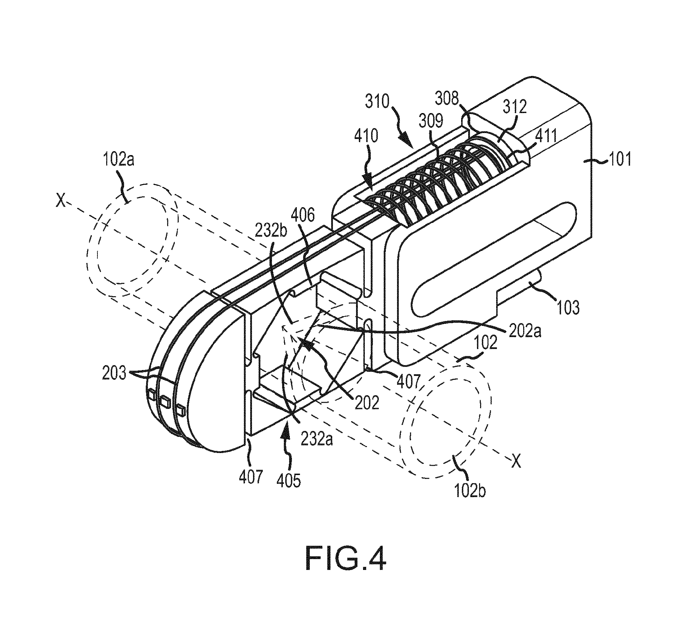

**FIG. 4** shows the pinch valve 100 according to another embodiment. In the embodiment shown in FIG. 4, the cover 104 has been removed, and the pinch valve 100 is shown rotated approximately 180° from the position shown in FIG. 1 in order to show the portion of the valve 100 located at the bottom of the valve 100 in FIG. 1.

According to an embodiment, the pinch valve 100 comprises a deformable sleeve 405. The deformable sleeve 405 is coupled to the base 101. In some embodiments, the deformable sleeve 405 can be formed as an integral part of the base 101, such as during a molding process; however, in other embodiments, the deformable sleeve 405 may be formed as a separate component and coupled to the base 101 according to known methods. The particular method used for coupling the deformable sleeve 405 to the base 101 is not important for a description of the present embodiment. The deformable sleeve 405 includes an aperture 406 sized and shaped to receive at least a portion of the tube 102. The tube 102 is shown in dashed lines in order to better illustrate the deformable sleeve 405. The deformable sleeve 405 can surround at least a portion of the tube 102. In the embodiment shown, the deformable sleeve 405 is configured to surround substantially the entire circumference of a portion of the tube 102 extending through the deformable sleeve 405. However, it should be appreciated that in other embodiments, the sleeve 405 may only surround a portion of the outer circumference of the tube 102, for example. For example, the deformable sleeve 405 may comprise only three sides to allow the tube to be easily removed by lifting the tube 102 through the omitted side rather than sliding the tube 102 through the aperture 406. However, in embodiments where the deformable sleeve 405 surrounds substantially the entire circumference of the tube 102, the deformable sleeve 405 can provide additional protection to the tube 102 in the event of over pressurization of the fluid within the tube 102. In addition, the deformable sleeve 405 can prevent the deformable orifice 202 from opening due to over pressurization of the fluid. In other words, the deformable sleeve 405 can prevent the displacement of the external area of the tube, which may lead to opening of the lips 232a, 232b.

According to an embodiment, the deformable sleeve 405 is provided to compress the tube 102 in order to open the deformable orifice 202 when the SMA elements 203 are actuated. As explained above, in alternative embodiments, the deformable orifice 202 may close when the tube 102 is compressed. The deformable orifice 202 is shown closed in FIG. 4 and can be seen as the slit 202a extends substantially perpendicular to the longitudinal axis, X-X of the tube 102.

According to an embodiment, the deformable sleeve 405 comprises one or more compression gaps 407. In the embodiment shown, the deformable sleeve 405 comprises two compression gaps 407. According to an embodiment, the compression gaps 407 extend in a direction substantially perpendicular to the slit 202a of the deformable orifice 202 as well as substantially perpendicular to the longitudinal axis X-X of the tube 102. The compression gaps 407 can aid in directing the deformation of the deformable sleeve 405. Therefore, the compression gaps 407 are not required; however, they may improve the response of the valve 100 as explained in more detail below.

According to an embodiment, the SMA elements 203 are be actuated to elastically deform the deformable sleeve 405. By elastically deformed, it is meant that upon removing the force that deforms the sleeve 405, the deformable sleeve 405 can return to original pre-deformed shape. Therefore, as shown, the SMA elements 203 may be coupled to the deformable sleeve 405. The SMA elements 203 extend around at least a portion of the deformable sleeve 405. While the SMA elements 203 are shown extending around the entire deformable sleeve 405, in other embodiments, the SMA elements 203 may extend around less than the entire deformable sleeve 405. According to an embodiment, the SMA elements 203 can deform the deformable sleeve 405 by pulling at least a portion of the deformable sleeve 405 towards the base 101. The SMA elements 203 therefore can deform the deformable sleeve 405 in a direction substantially perpendicular to the longitudinal axis X-X of the tube 102 and substantially parallel to the slit 202a. However, in the position shown in FIG. 4, the SMA elements 203 are below their transformation temperature and therefore, the SMA elements 203 can be stretched or otherwise deformed.

Also shown in FIG. 4 is the tension assembly 310. According to an embodiment, the tension assembly 310 is positioned in a channel 410 formed in the base 101. According to an embodiment, the release plug 308 can be coupled to the biasing member 309 and positioned in an aperture 411 formed in the base 101. In the embodiment shown, the aperture 411 is formed in the base 101 proximate the channel 410. The aperture 411 may be sized to receive a portion of the release plug 308, but prevent the release plug 308 from being fully inserted into the aperture 411. For example, in the embodiment shown, the lip 312 is larger than the aperture 411. Therefore, the lip 312 is not received by the aperture 411.

According to an embodiment, the biasing member 309 can advantageously bias the release plug 308 in the aperture 411. Consequently, because the SMA elements 203 are coupled to the tension assembly 310, the biasing member 309 can also secure the ends of the SMA elements 203 coupled to the release plug 308. Therefore, the biased release plug 308 can retain the second end of the SMA elements 203 in a substantially constant position. The biasing member 309 can advantageously bias the release plug 308 into the aperture 411 and stretch the one or more SMA elements 203 when the SMA elements 203 are below their transformation temperature. According to an embodiment, if a predetermined force is applied to the release plug 308 to overcome the biasing force of the biasing member 309, the release plug 308 can be moved at least partially out of the aperture 411 and into the channel 209 in order to remove the SMA elements 203, for example. By moving the release plug 308 at least partially out of the aperture 411, the tension applied to the SMA elements 203 by the biasing member 309 is at least partially removed, thereby allowing the first end of the SMA elements 203 to be removed from the support channel 220 or other component provided to retain the SMA elements 203 in place. Moving the release plug 308 also aids in inserting or removing the tube 102 between the deformable sleeve 405. This is because the tension of the SMA elements 203 may make it more difficult to move the tube 102 relative to the deformable sleeve 405. It should be appreciated that while the tension assembly 310 is shown comprising both the release plug 308 and the biasing member 309, in other embodiments, the tension assembly 310 may not include both components. For example, in some embodiments, the tension assembly 310 may omit the release plug 308 and the SMA elements 203 can be held in tension using the biasing member 309 located in the channel 410. Alternatively, the release plug 308 could be held within the aperture 411 using a friction fit or a snap fit, for example. In either situation, the tension assembly 310 can maintain tension on the one or more SMA elements 203.

Operation of the pinch valve 100 will now be described. As shown in FIG. 4, the SMA elements 203 can be stretched (deformed) while below the transformation temperature by the biasing member 309. Therefore, while the SMA elements 203 are below the transformation temperature, the force required to stretch the SMA elements 203 is less than the predetermined force required to deform the deformable sleeve 405. Because the deformable sleeve 405 is in an un-deformed position, the tube 102 is in its normally closed position with the deformable orifice 202 providing a substantially fluid-tight seal. While the discussion below discusses the deformable orifice 202, as mentioned above, in some embodiments, the pinch valve 100 can be operated using a tube that does not include the deformable orifice 202 and the deformable sleeve 405 can simply compress the tube 102 to reduce or close off the fluid flow.

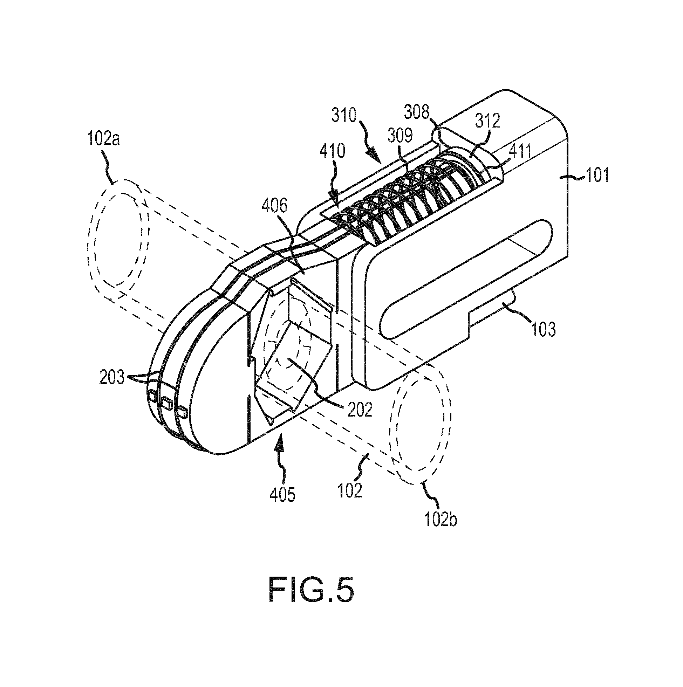

**FIG. 5** shows the pinch valve 100 in an actuated position. Actuation of the pinch valve 100 can be accomplished by actuating the one or more SMA elements 203. Upon energizing the electrical contacts 103, a voltage is applied between the electrical contact 103 and the release plug 308. The electrical resistance in the SMA elements 203 causes the temperature of the elements 203 to increase via thermoelectric heating to a temperature above the SMA's transformation temperature. Although the electrical contacts 103 are shown and described, it should be appreciated that in other embodiments, a separate heating element (not shown) may be used to energize the SMA elements 203. Therefore, the present embodiment should not be limited to electrical contacts 103. Rather, it should be appreciated that energizing the SMA elements 203 may comprise thermoelectrically energizing or some other form of thermal energy, such as provided by a separate heating element, for example.

According to an embodiment, once the temperature of the SMA elements 203 rises to above the transformation temperature, the SMA elements begin to transform from their first state (martensitic) towards their second state (austenitic). According to an embodiment, the second state comprises the SMA elements' pre-deformed (prestretched) size. According to an embodiment, this pre-deformed size is shorter than the stretched size shown in the previous figures. As the SMA elements 203 return to their pre-deformed size, the SMA elements apply a predetermined force to the deformable sleeve 405 and cause the deformable sleeve 405 to deform. More specifically, in the embodiment shown, the predetermined force applied by the SMA elements compresses the compression spaces 407, which compresses at least a portion of the tube 102. While the portion of the deformable sleeve 405 proximate the compression spaces 407 are pushed inward, the top and bottom portions of the compressible sleeve 405 are deformed slightly outward in response to the deformation of the tube 102. The deformation is exaggerated in FIG. 5 in order to better illustrate the movement of the deformable sleeve 405. In some embodiments, the top and bottom of the deformable sleeve 405 may not deform at all and substantially all of the deformation of the deformable sleeve 405 may be realized by the compression spaces 407. Preferably, the deformation of the deformable sleeve 405 compresses a portion of the tube 102 where the deformable orifice 202 is located. More specifically, the deformation of the deformable sleeve 405 compresses the tube 102 in a direction substantially parallel to the direction of the slit 202a causing the deformable orifice 202 to open. Consequently, as the SMA elements 203 return towards their pre-deformed size, the deformable orifice 202 is opened to allow fluid to flow from the first end 102a to the second end 102b of the tube 102. While the deformation of the deformable sleeve 405 is described as compressing the sides and deforming the top and bottom outward, it should be appreciated that this orientation is merely in relation to the orientation shown in the figures and should in no way limit the scope of the presently described embodiment.

In order to once again close the pinch valve 100, the electrical contacts 103 can be de-energized resulting in the temperature of the SMA elements 203 rapidly cooling. As the SMA elements 203 cool, they return to their martensitic state allowing the elasticity of the tube 102 and the deformable sleeve 405 to once again stretch the SMA elements 203. In addition to the elasticity of the tube 102 and the deformable sleeve 405, the pressure of the fluid within the tube 102 can provide a bias force on the tube 102 and the deformable sleeve 405 to once again stretch the SMA elements 203. This allows the tube 102 and the deformable sleeve 405 to return to their de-actuated state.

The embodiments described above provide an improved pinch valve 100. The improved pinch valve 100 can be actuated using one or more shape memory alloy elements 203 to compress the tube 102. The tube 102 can include a deformable orifice 202 that can open or close upon compression of the tube 102. Advantageously, actuation of the pinch valve 100 described above does not require overcoming a strong biasing spring as in prior art pinch valve configurations. Rather, the shape memory alloy elements 203 can simply compress the tube 102 and partially deform a deformable sleeve 405.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the pinch valve. It will also be apparent to those of ordinary skill in the art that the above-described embodiments may be combined in whole or in part to create additional embodiments within the scope and teachings of the present description.

Thus, although specific embodiments of, and examples for, the pinch valve are described herein for illustrative purposes, various equivalent modifications are possible within the scope of the present description, as those skilled in the relevant art will recognize. The teachings provided herein can be applied to other pinch valves, and not just to the embodiments described above and shown in the accompanying figures. Accordingly, the scope of the pinch valve should be determined from the following claims.

## Claims

1. An apparatus (100), comprising:
a base (101), a tube (102); and one or more shape memory elements (203) coupled to the base (101), **characterized in that**, the apparatus (100) further comprises:
a deformable sleeve (405), including an aperture (406), coupled to the base (101);
whereby the tube (102) extends through the aperture (406); and
the one or more shape memory alloy elements (203) extend around at least a portion of the deformable sleeve (405) wherein the one or more shape memory alloy elements (203) are adapted to compress the tube (102) and deform the deformable sleeve (405).

2. The apparatus (100) of claim 1, wherein the tube (102) includes a deformable orifice (202).

3. The apparatus (100) of claim 2, wherein the deformable orifice (202) comprises a pair of opposed lips (232a, 232b) extending from an inner surface of the tube (102) to define a normally closed substantially fluid-tight slit (202a).

4. The apparatus (100) of claim 3, wherein the pair of opposed lips (232a, 232b) extend from the inner surface of the tube (102) at an angle (θ) with respect to a longitudinal axis (X-X) of the tube (102).

5. The apparatus (100) of claim 1, further comprising an electrical contact (103) coupled to each of the one or more shape memory alloy elements (203).

6. The apparatus (100) of claim 1, further comprising a tension assembly (310) coupled to the one or more shape memory alloy elements (203).

7. The apparatus (100) of claim 6, wherein the tension assembly (310) comprises a biasing member (309) located within a channel (410) formed in the base (101).

8. The apparatus (100) of claim 6, wherein the tension assembly (310) comprises a release plug (308) and located within an aperture (411) formed in the base (101).

9. The apparatus (100) of claim 1, further comprising one or more compression spaces (407) formed in the deformable sleeve (405).

10. A method of operating a pinch valve including a base, a deformable sleeve coupled to the base, one or more shape memory alloy elements coupled to the base and extending around at least a portion of the deformable sleeve, and a tube extending through an aperture formed in the deformable sleeve, the method comprising steps of:
heating the one or more shape memory alloy elements above a transformation temperature;
deforming the deformable sleeve; and
compressing at least a portion of the tube using the one or more shape memory alloy elements.

11. The method of claim 10, wherein the step of compressing at least a portion of the tube comprises actuating a deformable orifice of the tube.

12. The method of claim 11, wherein the step of actuating the deformable orifice comprises compressing a pair of opposed lips extending from an inner surface of the tube to open a normally closed substantially fluid-tight slit.

13. The method of claim 10, wherein the step of heating the one or more shape memory alloy elements comprises energizing an electrical contact coupled to each of the one or more shape memory alloy elements.

14. The method of claim 10, wherein the step of deforming the deformable sleeve comprises compressing one or more compression spaces formed in the deformable sleeve.

## Patentansprüche

1. Vorrichtung (100) umfassend:
eine Basis (101), ein Rohr (102); und ein oder mehrere an die Basis (101) gekoppelte Formgedächtnis-Legierungselemente (203), **dadurch gekennzeichnet, dass** die Vorrichtung (100) ferner umfasst:
eine eine Apertur (406) aufweisende, an die Basis (101) gekoppelte verformbare Hülse (405);
wobei sich das Rohr (102) durch die Apertur (406) hindurch erstreckt; und
das eine oder die mehreren Formgedächtnis-Legierungselemente (203) um mindestens einen Abschnitt der verformbaren Hülse (405) herum verlaufen, wobei das eine oder die mehreren Formgedächtnis-Legierungselemente (203) angepasst sind, das Rohr (102) zu komprimieren und die verformbare Hülse (405) zu verformen.

2. Vorrichtung (100) nach Anspruch 1, wobei das Rohr (102) eine verformbare Blende (202) enthält.

3. Vorrichtung (100) nach Anspruch 2, wobei die verformbare Blende (202) ein Paar von einer Innenfläche des Rohres (102) ausgehender entgegengesetzter Lippen (232a, 232b) aufweist, die einen normalerweise geschlossenen, im Wesentlichen Fluid-dichten Schlitz (202a) definieren.

4. Vorrichtung (100) nach Anspruch 3, wobei sich das Paar entgegengesetzter Lippen (232a, 232b) von einer Innenfläche des Rohres (102) aus in einem Winkel (θ) mit Bezug auf eine Längsachse (X-X) des Rohres (102) erstreckt.

5. Vorrichtung (100) nach Anspruch 1, ferner umfassend einen elektrischen Kontakt (103), der an jedes des einen oder der mehreren Formgedächtnis-Legierungselemente gekoppelt ist.

6. Vorrichtung (100) nach Anspruch 1, ferner umfassend eine Spannbaugruppe (310), die an jedes des einen oder der mehreren Formgedächtnis-Legierungselemente gekoppelt ist.

7. Vorrichtung (100) nach Anspruch 6, wobei die Spannbaugruppe (310) ein Vorspannungsglied (309) umfasst, das sich innerhalb eines in der Basis ausgebildeten Kanals (410) befindet.

8. Vorrichtung (100) nach Anspruch 6, wobei die Spannbaugruppe (310) einen Freigabe-Stopfen (308) umfasst, der sich innerhalb einer in der Basis (101) ausgebildeten Apertur (411) befindet.

9. Vorrichtung (100) nach Anspruch 1, ferner umfassend einen oder mehrere in der verformbaren Hülse (405) ausgebildeten Kompressionsräume (407).

10. Verfahren zum Betätigen eines Quetschventils einschließlich einer Basis, einer an die Basis gekoppelten verformbaren Hülse, eines oder mehrerer an die Basis gekoppelten, um mindestens einen Abschnitt der verformbaren Hülse herum verlaufenden Formgedächtnis-Legierungselemente, und ein durch eine in der verformbaren Hülse ausgebildete Apertur verlaufendes Rohr, umfassend folgende Schritte:
Erhitzen des einen oder der mehreren Formgedächtnis-Legierungselemente über eine Transformationstemperatur hinaus;
Verformen der verformbaren Hülse; und
Komprimieren mindestens eines Abschnitts des Rohres mit Hilfe des einen oder der mehreren Formgedächtnis-Legierungselemente.

11. Verfahren nach Anspruch 10, wobei der Schritt des Komprimierens mindestens eines Abschnitts des Rohres das Betätigen einer verformbaren Blende des Rohres umfasst.

12. Verfahren nach Anspruch 11, wobei der Schritt des Betätigens der verformbaren Blende das Komprimieren eines Paares entgegengesetzter Lippen umfasst, die sich von einer Innenfläche des Rohres aus erstrecken um einen normalerweise geschlossenen im Wesentlichen fluid-dichten Schlitz zu öffnen.

13. Verfahren nach Anspruch 10, wobei der Schritt des Erhitzens des einen oder der mehreren Formgedächtnis-Legierungselemente das Erregen eines an jedes des einen oder der mehreren Formgedächtnis-Legierungselemente gekoppelten elektrischen Kontakts umfasst.

14. Verfahren nach Anspruch 10, wobei der Schritt des Verformens der verformbaren Hülse das Komprimieren eines oder mehrerer in der verformbaren Hülse ausgebildeten Kompressionsräume umfasst.

## Revendications

1. Appareil (100), comprenant :
une base (101), un tube (102) ; et un ou plusieurs éléments à mémoire de forme (203) couplés à la base (101), **caractérisé en ce que** l'appareil (100) comporte en outre :
un manchon déformable (405), incluant une ouverture (406), couplé à la base (101) ;
ce qui permet ainsi au tube (102) de se prolonger à travers l'ouverture (406) ; et
lesdits un ou plusieurs éléments en alliage à mémoire de forme (203) se prolongeant autour d'au moins une portion du manchon déformable (405),
cas dans lequel lesdits un ou plusieurs éléments en alliage à mémoire de forme (203) sont conçus pour comprimer le tube (102) et déformer le manchon déformable (405).

2. Appareil (100) selon la revendication 1, le tube (102) incluant un orifice déformable (202).

3. Appareil (100) selon la revendication 2, l'orifice déformable (202) comprenant une paire de lèvres opposées (232a, 232b) lesquelles se prolongent à partir d'une surface interne du tube (102) afin de définir une fente normalement fermée sensiblement étanche aux fluides (202a).

4. Appareil (100) selon la revendication 3, la paire de lèvres opposées (232a, 232b) se prolongeant à partir de la surface interne du tube (102) suivant un certain angle (θ) par rapport à un axe longitudinal (X-X) du tube (102).

5. Appareil (100) selon la revendication 1, comprenant en outre un contact électrique (103) lequel est couplé à chacun desdits un ou plusieurs éléments en alliage à mémoire de forme (203).

6. Appareil (100) selon la revendication 1, comprenant en outre un ensemble de tension (310) lequel est couplé auxdits un ou plusieurs éléments en alliage à mémoire de forme (203).

7. Appareil (100) selon la revendication 6, l'ensemble de tension (310) comprenant un élément de sollicitation (309) lequel est positionné à l'intérieur d'une section en creux (410) formée dans la base (101).

8. Appareil (100) selon la revendication 6, l'ensemble de tension (310) comprenant un obturateur de libération (308) et étant positionné à l'intérieur d'une ouverture (411) formée dans la base (101).

9. Appareil (100) selon la revendication 1, comprenant en outre un ou plusieurs espaces de compression (407) formés dans le manchon déformable (405).

10. Procédé permettant d'opérer une soupape à étranglement incluant une base, un manchon déformable lequel est couplé à la base, un ou plusieurs éléments en alliage à mémoire de forme lesquels sont couplés à la base et se prolongent autour d'au moins une portion du manchon déformable, et un tube lequel se prolonge à travers une ouverture formée dans le manchon déformable, le procédé comprenant les étapes consistant à :
chauffer lesdits un ou plusieurs éléments en alliage à mémoire de forme au-delà d'une température de transformation ;
déformer le manchon déformable ; et
comprimer au moins une portion du tube grâce à l'utilisation desdits un ou plusieurs éléments en alliage à mémoire de forme.

11. Procédé selon la revendication 10, l'étape de compression d'au moins une portion du tube comprenant l'actionnement d'un orifice déformable du tube.

12. Procédé selon la revendication 11, l'étape d'actionnement de l'orifice déformable comprenant la compression d'une paire de lèvres opposées lesquelles se prolongent à partir d'une surface interne du tube afin d'ouvrir une fente normalement fermée sensiblement étanche aux fluides.

13. Procédé selon la revendication 10, l'étape de chauffage desdits un ou plusieurs éléments en alliage à mémoire de forme comprenant l'excitation d'un contact électrique lequel est couplé à chacun desdits un ou plusieurs éléments en alliage à mémoire de forme.

14. Procédé selon la revendication 10, l'étape de déformation du manchon déformable comprenant la compression d'un ou de plusieurs espaces de compression formés dans le manchon déformable.
